(19) Europäisches Patentamt
European Patent Office
Office européen des brevets

(11) **EP 4 227 333 A1**

(12) **EUROPEAN PATENT APPLICATION**
published in accordance with Art. 153(4) EPC

(43) Date of publication:
**16.08.2023 Bulletin 2023/33**

(21) Application number: **21877217.6**

(22) Date of filing: **02.08.2021**

(51) International Patent Classification (IPC):
*C08F 290/06* (2006.01)   *C08G 18/28* (2006.01)
*C08G 18/67* (2006.01)    *C03C 25/285* (2018.01)
*C03C 25/326* (2018.01)   *C03C 25/6226* (2018.01)
*G02B 6/44* (2006.01)

(52) Cooperative Patent Classification (CPC):
C03C 25/285; C03C 25/326; C03C 25/6226;
C08F 290/06; C08G 18/28; C08G 18/67; G02B 6/44

(86) International application number:
**PCT/JP2021/028643**

(87) International publication number:
**WO 2022/074913 (14.04.2022 Gazette 2022/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.10.2020 JP 2020168494
05.10.2020 JP 2020168496**

(71) Applicant: **SUMITOMO ELECTRIC INDUSTRIES,
LTD.**
**Osaka-shi, Osaka 541-0041 (JP)**

(72) Inventor: **HOMMA, Yuya**
**Osaka-shi, Osaka 541-0041 (JP)**

(74) Representative: **Hoffmann Eitle**
**Patent- und Rechtsanwälte PartmbB
Arabellastraße 30
81925 München (DE)**

(54) **RESIN COMPOSITION, OPTICAL FIBER, AND METHOD FOR MANUFACTURING OPTICAL FIBER**

(57)   A resin composition for primary coating of an optical fiber contains a photopolymerizable compound including a urethane (meth)acrylamide, and a photopolymerization initiator, and the urethane (meth)acrylamide has a (meth)acrylamide group at at least one end of a urethane bond.

*Fig.1*

**Description**

**Technical Field**

The present disclosure relates to a resin composition for primary coating of an optical fiber, an optical fiber, and a method for manufacturing an optical fiber.

This application claims priority based on Japanese Patent Application No. 2020-168494 and Japanese Patent Application No. 2020-168496 filed on October 5, 2020, and the entire contents of the Japanese patent applications are incorporated herein by reference.

**Background Art**

Generally, an optical fiber includes a coating resin layer for protecting a glass fiber, which is an optical transmission medium. The coating resin layer is composed of two layers, for example, a primary resin layer in contact with the glass fiber and a secondary resin layer formed on the outer layer of the primary resin layer. It is known that urethane (meth)acrylate, which is a reaction product of polyol, diisocyanate, and hydroxyl group-containing(meth)acrylate, is used as a resin composition for primary coating of an optical fiber. For example, PTLs 1 to 5 describe a resin composition for primary coating containing urethane (meth)acrylate as an oligomer.

**Citation List**

**Patent Literature**

PTL 1: JP 2009-197163 A
PTL2: JP 2012-111674 A
PTL 3: JP 2013-136783 A
PTL 4: JP 2013-501125 A
PTL 5: JP 2014-114208 A

**Summary of Invention**

A resin composition for primary coating of an optical fiber according to one aspect of the present disclosure, the resin composition includes a photopolymerizable compound including a urethane (meth)acrylamide, and a photopolymerization initiator. The urethane (meth)acrylamide has a (meth)acrylamide group at at least one end of a urethane bond.

**Brief Description of Drawings**

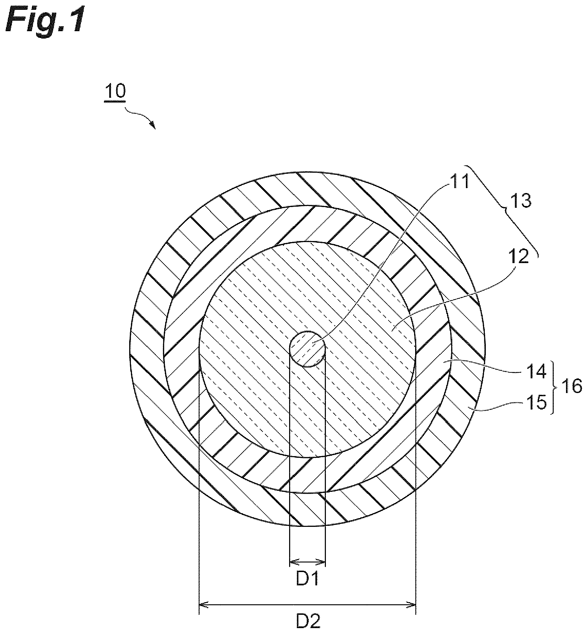

FIG. 1 is a schematic cross-sectional view showing an example of an optical fiber according to an embodiment of the present disclosure.

**Description of Embodiments**

[Problems to be Solved by Present Disclosure]

The resin composition for primary coating tends to have a slower curing rate than the resin composition for secondary coating, and in order to improve the productivity of the optical fiber, it is required to improve the curing rate of the resin composition for primary coating. If the curing of the primary resin layer is insufficient, defects (voids) may occur in the primary resin layer or peeling may occur between the glass fiber and the primary resin layer, which tends to increase the transmission loss.

An object of the present disclosure is to provide a resin composition having a high curing rate and capable of forming a resin layer suitable for primary coating of an optical fiber, and an optical fiber having excellent productivity.

[Advantageous Effects of Present Disclosure]

According to the present disclosure, it is possible to provide a resin composition having a high curing rate and capable of forming a resin layer suitable for primary coating of an optical fiber, and an optical fiber having excellent productivity.

[Description of Embodiments of Present Disclosure]

First, the contents of embodiments of the present disclosure will be listed and explained. A resin composition for primary coating of an optical fiber according to an aspect of the present disclosure, the resin composition includes a photopolymerizable compound including a urethane (meth)acrylamide, and a photopolymerization initiator. The urethane (meth)acrylamide has a (meth)acrylamide group at at least one end of a urethane bond.

Since such a resin composition has a high curing rate and does not cause defects in the primary resin layer and delamination between the glass fiber and the primary resin layer, it is possible to form a resin layer suitable for primary coating of the optical fiber and to improve productivity of the optical fiber.

From the viewpoint of increasing the curing rate of the primary resin layer, the urethane (meth)acrylamide may include a urethane oligomer having a (meth)acrylamide group at one end of a urethane bond, a urethane oligomer having (meth)acrylamide groups at both ends of a urethane bond, or a mixture of the urethane oligomers.

From the viewpoint of further increasing the curing rate of the primary resin layer, the urethane oligomer having a (meth)acrylamide group at one end of a urethane bond may include a urethane oligomer having a (meth)acrylamide group at one end of a urethane bond and having a (meth)acryloyloxy group at the other end.

The urethane (meth)acrylamide may include a urethane oligomer having (meth)acrylamide groups at both ends of a urethane bond and a urethane oligomer having a (meth)acrylamide group at one end of a urethane bond and having, at the other end, a group derived from at least one compound selected from monohydric alcohols and active hydrogen-containing silane compounds. This makes it easy to adjust the balance between the curing rate of the resin composition and the Young's modulus of the primary resin layer.

From the viewpoint of enhancing the photocurability of the resin composition, a content of the urethane (meth)acrylamide may be 10 parts by mass to 90 parts by mass based on 100 parts by mass of a total amount of the resin composition.

From the viewpoint of reducing the Young's modulus of the resin composition, the urethane (meth)acrylamide may have a number-average molecular weight of 10000 to 37000.

In order to adjust the Young's modulus of the primary resin layer, the photopolymerizable compound may further include a (meth)acrylic acid ester.

In order to further improve the curing rate of the resin composition, the photopolymerizable compound may further include an N-vinyl compound or a (meth)acrylamide compound.

An optical fiber according to an embodiment of present disclosure includes a glass fiber including a core and a cladding, a primary resin layer covering the glass fiber so as to be in contact with the glass fiber, and a secondary resin layer covering the primary resin layer. The primary resin layer includes a cured product of the resin composition. Such an optical fiber has excellent productivity without causing defects in the primary resin layer or peeling between the glass fiber and the primary resin layer.

A method for manufacturing an optical fiber according to an embodiment of the present disclosure, the method includes applying the resin composition to an outer periphery of a glass fiber including a core and a cladding; and curing the resin composition by ultraviolet irradiation after the applying. Thus, an optical fiber having excellent productivity can be produced.

[Details of Embodiments of Present Disclosure]

Specific examples of the resin composition and the optical fiber according to the embodiment of the present disclosure will be described with reference to the drawings if necessary. The present disclosure is not limited to these examples and is defined by the scope of the claims, and is intended to include all modifications within the meaning and scope equivalent to the scope of the claims. In the following description, the same elements are denoted by the same reference numerals in the description of the drawings, and redundant description is omitted. As used herein, (meth)acrylamide means acrylamide or the corresponding methacrylamide. The same applies to other similar expressions such as (meth)acryloyloxy, (meth)acrylate and the like.

(Resin Composition)

The resin composition according to an embodiment of the present disclosure includes a photopolymerizable compound including a urethane (meth)acrylamide, and a photopolymerization initiator. The urethane (meth)acrylamide is a urethane oligomer having a (meth)acrylamide group at at least one end of the urethane bond. Since the (meth)acrylamide group is more excellent in photo-polymerization property than the (meth)acryloyloxy group, the urethane (meth)acrylamide has a higher curing rate than the urethane (meth)acrylate having no (meth)acrylamide group, thereby improving the productivity of the optical fiber.

The urethane (meth)acrylamide may be a urethane oligomer having a (meth)acrylamide group at one end of a urethane bond, a urethane oligomer having (meth)acrylamide groups at both ends of a urethane bond. That is, the urethane (meth)acrylamide according to the embodiment of the present disclosure may include a urethane oligomer having a (meth)acrylamide group at one end of a urethane bond, a urethane oligomer having (meth)acrylamide groups at both ends of a urethane bond, or a mixture of the urethane oligomers.

The urethane (meth)acrylamide according to the embodiment of the present disclosure may include a urethane oligomer having a (meth)acrylamide group at both ends of the urethane bond from the viewpoint of further increasing the curing rate of the resin composition. The urethane oligomer having (meth)acrylamide groups at both ends of the urethane bond may be a reaction product of polyol, diisocyanate, and N-hydroxyalkyl(meth)acrylamide.

Examples of the polyol include polyether polyols, polyester polyols, polycaprolactone polyols, polycarbonate polyols, polybutadiene polyols, and a bisphenol A-ethylene oxide adduct diol. Examples of the polyether polyol include polytetramethylene ether glycol, polyethylene glycol, and polypropylene glycol. Polypropylene glycol, polytetramethylene ether glycol, or polycarbonate polyols are preferably used as the polyol because the Young's modulus and elongation at break of the resin layer can be easily adjusted.

From the viewpoint of obtaining a Young's modulus suitable for the primary resin layer, the polyol has the number-average molecular weight (Mn) of preferably 2000 to 20000, more preferably 2400 to 19000, and still more preferably 2800 to 18000.

Examples of the diisocyanate include 2,4-tolylene diisocyanate, 2,6-tolylene diisocyanate, isophorone diisocyanate, dicyclohexylmethane diisocyanate, diphenylmethane diisocyanate, hexamethylene diisocyanate, xylylene diisocyanate, hydrogenated xylylene diisocyanate, 1,5-naphthalene diisocyanate, norbornene diisocyanate, 1,5-pentamethylene diisocyanate, tetramethylxylylene diisocyanate, and trimethylhexamethylene diisocyanate.

Examples of the N-hydroxyalkyl(meth)acrylamide include N-hydroxymethyl (meth)acrylamide, N-hydroxyethyl(meth)acrylamide, and N, N-dimethylol(meth)acrylamide. As the N-hydroxyalkyl(meth)acrylamide, N-hydroxyethyl acrylamide is preferably used.

From the viewpoint of adjusting the Young's modulus of the primary resin layer, the urethane (meth)acrylamide may further have a group derived from at least one compound selected from monohydric alcohols and active hydrogen-containing silane compound. The urethane (meth)acrylamide may be a reaction product of polyol, diisocyanate, N-hydroxyalkyl(meth)acrylamide, and at least one compound selected from monohydric alcohol and active hydrogen-containing silane compound.

From the viewpoint of adjusting the balance between the curing rate of the resin composition and the Young's modulus of the primary resin layer, the urethane (meth)acrylamide may include a urethane oligomer having a (meth)acrylamide group at one end of a urethane bond and having, at the other end, a group derived from at least one compound selected from monohydric alcohols and active hydrogen-containing silane compounds.

By introducing a group based on monohydric alcohol into urethane (meth)acrylamide, the ratio of the (meth)acrylamide group, which is a photopolymerizable group, can be reduced, and the Young's modulus of the primary resin layer can be reduced.

Since the resin composition according to the embodiment of the present disclosure contains the urethane oligomer having the (meth)acrylamide group at one end of the urethane bond and the group based on monohydric alcohol at the other end, the ratio of the photopolymerizable group is reduced, and the Young's modulus of the primary resin layer is easily reduced. The urethane oligomer having a (meth)acrylamide group and a group based on monohydric alcohol is a reaction product of polyol, diisocyanate, N-hydroxyalkyl(meth)acrylamide, and monohydric alcohol.

Examples of the monohydric alcohol include methanol, ethanol, 1-propanol, 2-propanol, 1-butanol, 2-butanol, 2-methyl-2-propanol, 1-pentanol, 2-pentanol, 3-pentanol, 2-methyl-1-butanol, 3-methyl-1-butanol, 2-methyl-2-butanol, and 3-methyl-2-butanol.

By introducing a group based on an active hydrogen-containing silane compound into urethane (meth)acrylamide, the ratio of the (meth)acrylamide group, which is a photopolymerizable group, may be reduced, the Young's modulus of the primary resin layer may be reduced, and the adhesion with the glass fiber may be improved.

The resin composition according to the embodiment of the present disclosure may include a urethane oligomer having a (meth)acrylamide group at one end of a urethane bond and a group based on an active hydrogen-containing silane compound at the other end of the urethane bond, thereby reducing the Young's modulus of the primary resin layer and improving adhesion with the glass fiber. The urethane oligomer having a (meth)acrylamide group and a group based on an active hydrogen-containing silane compound is a reaction product of polyol, diisocyanate, N-hydroxyalkyl(meth)acrylamide, and an active hydrogen-containing silane compound.

Examples of the active hydrogen-containing silane compound include N-2-(aminoethyl)-3-aminopropyl methyl dimethoxy silane, N-2-(aminoethyl)-3-aminopropyl trimethoxy silane, 3-aminopropyl trimethoxy silane, 3-aminopropyl triethoxy silane, 3-triethoxysilyl-N-(1, 3-dimethyl-butylidene) propylamine, N-phenyl-3-aminopropyl trimethoxy silane, 3-mercaptopropyl methyl dimethoxy silane, and 3-mercaptopropyl trimethoxy silane.

Examples of the method of synthesizing urethane (meth)acrylamide include a method in which polyol and diisocyanate are reacted and then N-hydroxyalkyl(meth)acrylamide (as necessary, monohydric alcohol or active hydrogen-containing silane compound) are reacted; a method in which diisocyanate and N-hydroxyalkyl(meth)acrylamide (as necessary, monohydric alcohol or active hydrogen-containing silane compound) are reacted and then polyol is reacted; and a method in which polyol, diisocyanate, and N-hydroxyalkyl(meth)acrylamide (as necessary, monohydric alcohol or active hydrogen-containing compound) are simultaneously reacted.

When a bifunctional polyol is used, a method in which a hydroxyl group (OH) of the polyol is reacted with an isocyanate group (NCO) of a diisocyanate and then reacted with N-hydroxyalkyl(meth)acrylamide (as necessary, monohydric alcohol or active hydrogen-containing silane compound) is preferable. When a polyol having three or more functional groups is used, a method in which a diisocyanate is reacted with an N-hydroxyalkyl(meth)acrylamide (as necessary, a monohydric alcohol or an active hydrogen-containing silane compound) and then reacted with a polyol is preferable.

Hereinafter, preparation of urethane (meth)acrylamide will be described with reference to specific examples. For example, bifunctional polypropylene polyol (polypropylene glycol) as the polyol, 2, 4-tolylene diisocyanate as the diisocyanate, N-hydroxyethyl acrylamide as the N-hydroxyalkyl(meth)acrylamide, methanol as the monohydric alcohol, and 3-mercaptopropyl trimethoxy silane as the active hydrogen-containing compound are used.

First, polypropylene glycol and 2, 4-tolylene diisocyanate are reacted to synthesize an NCO end prepolymer. Subsequently, the NCO end prepolymer is reacted with N-hydroxyethyl acrylamide, methanol, and 3-mercaptopropyl trimethoxy silane to synthesize urethane acrylamide. The urethane acrylamide can be represented as a mixture of the following (1) to (3).

$$\text{Am-(U-I-U-P)n-U-I-U-Am} \qquad (1)$$

$$\text{Am-(U-I-U-P)n-U-I-U-M} \qquad (2)$$

$$\text{Am-(U-I-U-P)n-U-I-U-SC} \qquad (3)$$

Here, Am represents a residue of N-hydroxyethyl acrylamide, M represents a residue of methanol, SC represents a residue of 3-mercaptopropyl trimethoxy silane, U represents a (thio) urethane bond, I represents a residue of 2, 4-tolylene diisocyanate, P represents a residue of polypropylene glycol, and n is an integer of 1 or more.

The reaction product in the synthesis of the urethane acrylamide may contain the following (4) to (6) as by-products. (4) to (6) are called adduct products and function as one kind of monomer.

$$\text{Am-U-I-U-I-U-Am} \qquad (4)$$

$$\text{Am-U-I-U-I-U-M} \qquad (5)$$

$$\text{Am-U-I-U-I-U-SC} \qquad (6)$$

The reaction product in the synthesis of the urethane acrylamide may also contain the following (7) to (12) as by-products. Since compounds (7) to (12) do not have a photopolymerizable group, it is desirable not to generate them.

$$\text{M-(U-I-U-P)n-U-I-U-M} \qquad (7)$$

$$\text{Sc-(U-I-U-P)n-U-I-U-SC} \qquad (8)$$

$$\text{M-(U-I-U-P)n-U-I-U-SC} \qquad (9)$$

$$\text{M-U-I-U-M} \qquad (10)$$

$$\text{M-U-I-U-SC} \qquad (11)$$

$$\text{SC-U-I-U-SC} \qquad (12)$$

When preparing urethane (meth)acrylamide, the addition of methanol and 3-mercaptopropyl trimethoxy silane is optional, and when methanol and 3-mercaptopropyl trimethoxy silane are not added, (1) is produced as a main component and (4) is produced as a by-product.

The molar ratio of NCO to OH (NCO/OH) when polyol and diisocyanate are reacted is preferably 1.1 to 4.0, more preferably 1.2 to 3.5 or less, and still more preferably 1.4 to 3.0 or less. The molar ratio of the total of N-hydroxyalkyl(meth)acrylamide, monohydric alcohol, and active hydrogen-containing silane compound to NCO in the NCO end prepolymer is preferably 1.00 to 1.15, more preferably 1.03 to 1.10. The molar ratio of the total of monohydric alcohol and active hydrogen-containing silane compound to NCO in the NCO end prepolymer is preferably 0 to 0.5.

From the viewpoint of adjusting the balance between the curing rate of the resin composition and the Young's modulus of the resin layer, the urethane (meth)acrylamide may include a urethane oligomer having (meth)acrylamide groups at both ends of a urethane bond and a urethane oligomer having a (meth)acrylamide group at one end of a urethane bond and having, at the other end, a group derived from at least one compound selected from monohydric alcohols and active hydrogen-containing silane compounds.

From the viewpoint of enhancing the photocurability of the resin composition, the content of the urethane (meth)acrylamide is preferably 10 parts by mass to 90 parts by mass, more preferably 20 parts by mass to 80 parts by mass, and even more preferably 30 parts by mass to 75 parts by mass based on 100 parts by mass of a total amount of the resin composition.

The urethane oligomer having a (meth)acrylamide group at one end of a urethane bond may include a urethane oligomer having a (meth)acrylamide group at one end of a urethane bond and having a (meth)acryloyloxy group at the other end. The urethane oligomer having the (meth)acrylamide group and the (meth)acryloyloxy group as the photopolymerizable group may have a higher curing rate than the urethane oligomer having only the (meth)acryloyloxy group, and thus may improve productivity of the optical fiber.

The urethane oligomer having a (meth)acrylamide group and a (meth)acryloyloxy group is a reaction product of polyol, diisocyanate, N-hydroxyalkyl(meth)acrylamide, and hydroxyl group-containing (meth)acrylate.

Examples of the hydroxyl group-containing (meth)acrylate include 2-hydroxyethyl (meth)acrylate, 2-hydroxypropyl (meth)acrylate, 2-hydroxybutyl (meth)acrylate, caprolactone (meth)acrylate, 2-hydroxy-3-phenoxypropyl (meth)acrylate, 2-(meth)acryloyloxyethyl-2-hydroxyethyl phthalic acid, 2-hydroxy-O-phenylphenolpropyl (meth)acrylate, 2-hydroxy-3-methacrylpropyl acrylate, trimethylolpropane di(meth)acrylate, and pentaerythritol tri(meth)acrylate. As the hydroxyl group-containing (meth)acrylate, 2-hydroxyethyl(meth)acrylate, 2-hydroxypropyl(meth)acrylate, or 2-hydroxybutyl(meth)acrylate is preferably used.

Examples of other methods for synthesizing urethane (meth)acrylamide when hydroxyl group-containing (meth)acrylate is used as an essential component include a method in which polyol and diisocyanate are reacted, and then N-hydroxyalkyl(meth)acrylamide and hydroxyl group-containing (meth)acrylate (as necessary, monohydric alcohol or active hydrogen-containing silane compound) are reacted; a method in which diisocyanate, N-hydroxyalkyl(meth)acrylamide and hydroxyl group-containing (meth)acrylate (as necessary, monohydric alcohol or active hydrogen-containing silane compound) are reacted, and then polyol is reacted; and a method in which polyol, diisocyanate, N-hydroxyalkyl(meth)acrylamide and hydroxyl group-containing (meth)acrylate (as necessary, monohydric alcohol or active hydrogen-containing silane compound) are simultaneously reacted.

When a bifunctional polyol is used, a method in which a hydroxyl group (OH) of the polyol is reacted with an isocyanate group (NCO) of a diisocyanate and then reacted with N-hydroxyalkyl(meth)acrylamide and a hydroxyl group-containing (meth)acrylate (as necessary, monohydric alcohol or active hydrogen-containing silane compound) is preferable. When a polyol having three or more functional groups is used, a method in which a diisocyanate, an N-hydroxyalkyl(meth)acrylamide, and a hydroxyl group-containing (meth)acrylate (as necessary, monohydric alcohol or active hydrogen-containing silane compound) are reacted and then a polyol is reacted is preferable.

Hereinafter, preparation of the urethane oligomer having a (meth)acrylamide group and a (meth)acryloyloxy group will be described with reference to specific examples. For example, bifunctional polypropylene polyol (polypropylene glycol) as polyol, 2, 4-tolylene diisocyanate as diisocyanate, N-hydroxyethyl acrylamide as N-hydroxyalkyl(meth)acrylamide, 2-hydroxyethyl acrylate as hydroxyl group-containing (meth)acrylate, methanol as monohydric alcohol, and 3-mercaptopropyl trimethoxy silane as active hydrogen-containing silane compound may be used.

First, polypropylene glycol and 2, 4-tolylene diisocyanate are reacted to synthesize an NCO end prepolymer. Subsequently, the NCO end prepolymer is reacted with N-hydroxyethyl acrylamide, 2-hydroxyethyl acrylate, methanol, and 3-mercaptopropyl trimethoxy silane to synthesize a urethane oligomer. The urethane oligomer can be represented as a mixture of the following formulas (21) to (27).

$$Am\text{-}(U\text{-}I\text{-}U\text{-}P)n\text{-}U\text{-}I\text{-}U\text{-}Ac \quad (21)$$

$$Am\text{-}(U\text{-}I\text{-}U\text{-}P)n\text{-}U\text{-}I\text{-}U\text{-}Am \quad (22)$$

$$Ac\text{-}(U\text{-}I\text{-}U\text{-}P)n\text{-}U\text{-}I\text{-}U\text{-}Ac \quad (23)$$

$$Am\text{-}(U\text{-}I\text{-}U\text{-}P)n\text{-}U\text{-}I\text{-}U\text{-}M \quad (24)$$

$$Am\text{-}(U\text{-}I\text{-}U\text{-}P)n\text{-}U\text{-}I\text{-}U\text{-}SC \quad (25)$$

Ac-(U-I-U-P)n-U-I-U-M          (26)

Ac-(U-I-U-P)n-U-I-U-SC         (27)

Here, Am represents a residue of N-hydroxyethyl acrylamide, Ac represents a residue of 2-hydroxyethyl acrylate, M represents a residue of methanol, SC represents a residue of 3-mercaptopropyl trimethoxy silane, U represents a (thio) urethane bond, I represents a residue of 2, 4-tolylene diisocyanate, P represents a residue of polypropylene glycol, and n is an integer of 1 or more.

The reaction product in the synthesis of the urethane oligomer may contain the following (28) to (34) as by-products. (28) to (34) are called adduct products and function as one kind of monomer.

Am-U-I-U-Ac          (28)

Am-U-I-U-Am (          29)

Ac-U-I-U-Ac          (30)

Am-U-I-U-M          (31)

Am-U-I-U-SC          (32)

Ac-U-I-U-M          (33)

Ac-U-I-U-SC          (34)

The reaction product in the synthesis of the urethane oligomer may also contain the following (35) to (40) as by-products. Since compounds (35) to (40) do not have a photopolymerizable group, it is desirable not to generate them.

M-(U-I-U-P)n-U-I-U-M          (35)

SC-(U-I-U-P)n-U-I-U-SC          (36)

M-(U-I-U-P)n-U-I-U-SC          (37)

M-U-I-U-M          (38)

M-U-I-U-SC          (39)

SC-U-I-U-SC          (40)

When the urethane oligomer is prepared, addition of methanol and 3-mercaptopropyl trimethoxy silane is optional, and when methanol and 3-mercaptopropyl trimethoxy silane are not added, a mixture of (21) to (23) and (28) to (30) is formed.

The molar ratio of NCO to OH (NCO/OH) when polyol and diisocyanate are reacted is preferably 1.1 to 4.0, more preferably 1.2 to 3.5, and still more preferably 1.4 to 3.0. The molar ratio of N-hydroxyalkyl(meth)acrylamide to NCO in the NCO end prepolymer is preferably 0.1 to 0.95, more preferably 0.2 to 0.8. The molar ratio of the hydroxyl group-containing (meth)acrylate to NCO of the NCO end prepolymer is preferably 0.1 to 0.95, more preferably 0.2 to 0.9. The molar ratio of the total of N-hydroxyalkyl(meth)acrylamide, hydroxyl group-containing (meth)acrylate, monohydric alcohol, and active hydrogen-containing silane compound to NCO of the NCO end prepolymer is preferably 1.00 to 1.15, more preferably 1.03 to 1.10. The molar ratio of the total of monohydric alcohol and active hydrogen-containing silane compound to NCO of the NCO end prepolymer is preferably 0 to 0.5.

The content of the urethane (meth)acrylamide including the urethane oligomer having the (meth)acrylamide group and the (meth)acryloyloxy group is preferably 30 parts by mass to 90 parts by mass, more preferably 40 parts by mass to 80 parts by mass, and still more preferably 45 parts by mass to 75 parts by mass based on 100 parts by mass of the total amount of the resin composition from the viewpoint of enhancing the photocurability of the resin composition.

From the viewpoint of obtaining a Young's modulus suitable for the primary resin layer, the number-average molecular weight (Mn) of the urethane (meth)acrylamide is preferably 6000 to 40000, more preferably 8000 to 38000, and still more preferably 10000 to 37000.

The photopolymerizable compound according to the embodiment of the present disclosure may further comprise urethane (meth)acrylate. The urethane (meth)acrylate is a urethane oligomer having a (meth)acryloyloxy group and not having a (meth)acrylamide group. The urethane (meth)acrylate may be obtained by reacting polyol, diisocyanate, and hydroxyl group-containing (meth)acrylate according to a conventional method.

The polyol and the diisocyanate used in the synthesis of the urethane (meth)acrylate are not particularly limited, but may be selected from the compounds exemplified in the synthesis of the urethane (meth)acrylamide.

Examples of the hydroxyl group-containing (meth)acrylate include 2-hydroxyethyl (meth)acrylate, 2-hydroxypropyl (meth)acrylate, 2-hydroxybutyl (meth)acrylate, caprolactone (meth)acrylate, 2-hydroxy-3-phenoxypropyl (meth)acrylate, 2-(meth)acryloyloxyethyl-2-hydroxyethyl phthalic acid, 2-hydroxy-O-phenylphenolpropyl (meth)acrylate, 2-hydroxy-3-methacrylpropyl acrylate, trimethylolpropane di(meth)acrylate, and pentaerythritol tri(meth)acrylate.

The Mn of the urethane (meth)acrylate may be 5000 to 30000, 6000 to 20000, or 8000 to 15000 from the viewpoint of obtaining a Young's modulus suitable for the primary resin layer.

A total content of urethane (meth)acrylamide and urethane (meth)acrylate may be 40 parts by mass to 90 parts by mass based on a total amount of the resin composition.

An organotin compound or an amine compound is used as a catalyst for synthesizing urethane (meth)acrylamide and urethane (meth)acrylate. Examples of the organotin compound include dibutyltin dilaurate, dibutyltin diacetate, dibutyltin maleate, dibutyltin bis (2-ethylhexyl mercaptoacetate), dibutyltin bis (isooctyl mercaptoacetate), and dibutyltin oxide. It is preferable to use dibutyltin dilaurate or dibutyltin diacetate from the view point of availability or catalytic performance.

The photopolymerizable compound according to the embodiment of the present disclosure is a photopolymerizable compound having no urethane bond (hereinafter referred to as a "monomer"). Examples of the monomer include (meth)acrylic acid ester, an N-vinyl compound, and a (meth)acrylamide compound. The monomer may be a monofunctional monomer having one photopolymerizable ethylenically unsaturated group, or may be a polyfunctional monomer having two or more ethylenically unsaturated groups.

Examples of monofunctional (meth)acrylic acid ester include methyl (meth)acrylate, ethyl (meth)acrylate, propyl (meth)acrylate, n-butyl (meth)acrylate, s-butyl (meth)acrylate, t-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, isodecyl (meth)acrylate, lauryl (meth)acrylate, phenoxyethyl (meth)acrylate, tetrahydrofurfuryl (meth)acrylate, benzyl (meth)acrylate, dicyclopentenyl (meth)acrylate, dicyclopentenyloxyethyl (meth)acrylate, dicyclopentanyl (meth)acrylate, nonylphenol polyethylene glycol (meth)acrylate, nonylphenoxypolyethylene glycol (meth)acrylate, isobornyl (meth)acrylate, 3-phenoxybenzyl (meth)acrylate, methylphenoxy ethyl (meth)acrylate, phenoxydiethylene glycol (meth)acrylate, phenoxypolyethylene glycol (meth)acrylate, m-phenoxybenzyl (meth)acrylate, 2-(2-ethoxyethoxy)ethyl (meth)acrylate, and 2-hydroxy-3-phenoxypropyl acrylate, carboxyethyl (meth)acrylate, carboxypentyl (meth)acrylate, and ω-carboxy-polycaprolactone (meth)acrylate.

Examples of the polyfunctional (meth)acrylic acid ester include bifunctional monomers such as ethylene glycol di(meth)acrylate, polyethylene glycol di(meth)acrylate, polypropylene glycol di(meth)acrylate, neopentyl glycol di(meth)acrylate, tripropylene glycol di(meth)acrylate, triethylene glycol di(meth)acrylate, cyclohexanedimethanol di(meth)acrylate, dipropylene glycol di(meth)acrylate, tetraethylene glycol di(meth)acrylate, hydroxypivalate neopentyl glycol di(meth)acrylate, 1, 3-butylene glycol di(meth)acrylate, 1, 4-butanediol di(meth)acrylate, diethylene glycol di(meth)acrylate, 1, 6-hexanediol di(meth)acrylate, 1,9-nonanediol di(meth)acrylate, 1,12-dodecanediol di(meth)acrylate, 1,14-tetradecanediol di(meth)acrylate, 1,16-haxadecanediol di(meth)acrylate, 1,20-eicosanediol di(meth)acrylate, isopentyldiol di(meth)acrylate, 3-ethyl-1, 8-octanediol di(meth)acrylate, tricyclodecanol di(meth)acrylate, 9, 9-bis [4-(2-hydroxyethoxy) phenyl] fluorene di(meth)acrylate, bisphenol A-epoxy di(meth)acrylate, bisphenol F-epoxy di(meth)acrylate, bisphenol A-EO-adduct di(meth)acrylate, bisphenol F-EO-adduct di(meth)acrylate, bisphenol A-PO-adduct di(meth)acrylate, and bisphenol F-PO-adduct di(meth)acrylate; monomers having three or more functional groups such as trimethylolpropane tri(meth)acrylate, trimethyloloctane tri(meth)acrylate, trimethylolpropane polyethoxy tri(meth)acrylate, trimethylolpropane polypropoxy tri(meth)acrylate, trimethylolpropane polyethoxy polypropoxy tri(meth)acrylate, tris [(meth)acryloyloxyethyl] isocyanurate, pentaerythritol tri(meth)acrylate, pentaerythritol polyethoxy tetra(meth)acrylate, pentaerythritol polypropoxy tetra(meth)acrylate, pentaerythritol tetra(meth)acrylate, ditrimethylolpropane tetra(meth)acrylate, dipentaerythritol tetra(meth)acrylate, dipentaerythritol penta(meth)acrylate, dipentaerythritol hexa(meth)acrylate, and caprolactone-modified tris [(meth)acryloyloxyethyl] isocyanurate.

When the photopolymerizable compound includes (meth)acrylic acid ester, the Young's modulus of the resin layer may be adjusted. The content of the (meth)acrylic acid ester may be 1 part by mass to 60 parts by mass, 5 parts by mass to 50 parts by mass, or 10 parts by mass to 40 parts by mass based on 100 parts by mass of the total amount of the resin composition.

Examples of the N-vinyl compound include N-vinylpyrrolidone, N-vinylcaprolactam, N-vinylmethyloxazolidinone, N-vinyl imidazole, and N-vinyl-N-methylacetamide.

When the photopolymerizable compound includes an N-vinyl compound, the curing rate of the resin composition may be further improved. The content of the N-vinyl compound may be 1 part by mass to 30 parts by mass, 2 parts by mass to 20 parts by mass, or 5 parts by mass to 15 parts by mass based on 100 parts by mass of the total amount of the resin composition.

Examples of the (meth)acrylamide compound include dimethyl (meth)acrylamide, diethyl(meth)acrylamide, (meth)acryloylmorpholine, hydroxymethyl(meth)acrylamide, hydroxyethyl(meth)acrylamide, isopropyl(meth)acrylamide, dimethylaminopropyl(meth)acrylamide, dimethylaminopropylacrylamide-methyl chloride salt, diacetone acrylamide, (meth)acryloylpiperidine, (meth)acryloylpyrrolidine, (meth)acrylamide, N-hexyl(meth)acrylamide, N-methyl(meth)acrylamide, N-butyl(meth)acrylamide, N-methylol(meth)acrylamide, and N-methylolpropane (meth)acrylamide.

When the photopolymerizable compound includes a (meth)acrylamide compound, the curing rate of the resin composition may be further improved. The content of the (meth)acrylamide compound may be 1 part by mass to 30 parts by mass, 2 parts by mass to 20 parts by mass, or 5 parts by mass to 15 parts by mass based on 100 parts by mass of the total amount of the resin composition.

The photopolymerization initiator can be suitably selected from well-known radical photopolymerization initiators and used. Examples of the photopolymerization initiator include 1-hydroxycyclohexyl phenyl ketone (Omnirad 184, produced by IGM Resins B.V.), 2,2-dimethoxy-2-phenyl acetophenone (Omnirad 651, produced by IGM Resins B.V), 2,4,6-trimethylbenzoyl diphenylphosphine oxide (Omnirad TPO, produced by IGM Resins B.V), ethyl(2,4,6-trimethylbenzoyl)-phenyl phosphinate (Omnirad TPO-L, produced by IGM Resins B. V.), 2-benzyl-2-dimethylamino-4'-morpholinobutyrophenone (Omnirad 369, produced by IGM Resins B.V.), 2-dimethylamino-2-(4-methylbenzyl)-1-(4-morpholin-4-yl-phenyl)-butan-1-one (Omnirad 379, produced by IGM Resins B.V.), bis(2,4,6-trimethylbenzoyl)phenylphosphine oxide (Omnirad 819, produced by IGM Resins B.V.), and 2-methyl-1-[4-(methylthio)phenyl]-2-morpholinopropan-1-one (Omnirad 907, produced by IGM Resins B.V.).

Two or more photopolymerization initiators may be used in a mixture. It is preferable due to excellent rapid curability of the resin composition that the photopolymerization initiator contain 2,4,6-trimethylbenzoyldiphenylphosphine oxide.

The content of the photopolymerization initiator is preferably 0.2 part by mass to 5 parts by mass, more preferably 0.3 part by mass to 4 parts by mass, and still more preferably 0.4 part by mass to 3 parts by mass based on the total amount of the resin composition.

The resin composition according to the embodiment of the present disclosure may further contain a photoacid generator, a silane coupling agent, a leveling agent, an antifoaming agent, an antioxidant, an ultraviolet absorber, and the like.

An onium salt having a structure of $A^+B^-$ may be used as the photoacid generator. Examples of the photoacid generator include sulfonium salts such as CPI-100P and 110P (produced by San-Apro Ltd.) and Omnicat 270 and 290 (produced by IGM Resins B.V.); and iodonium salts such as Omnicat 250 (produced by IGM Resins B. V.), WPI-113,116, 124, 169, and 170 (produced by FUJIFILM Wako Pure Chemical Corporation).

Examples of the silane coupling agent include tetramethylsilicate, tetraethylsilicate, mercaptopropyl trimethoxysilane, vinyltrichlorosilane, vinyltriethoxysilane, vinyltris (β-methoxy-ethoxy) silane, β-(3, 4-epoxycyclohexyl)-ethyltrimethoxysilane, dimethoxydimethylsilane, diethoxydimethylsilane, 3-acryloxypropyl trimethoxysilane, γ-glycidoxypropyltrimethoxysilane, γ-glycidoxypropylmethyldiethoxysilane, γ-methacryloxypropyltrimethoxysilane, N-(β-aminoethyl)-γ-aminopropyltrimethoxysilane, N-(β-aminoethyl)-γ-aminopropyltrimethyldimethoxysilane, N-phenyl-γ-aminopropyltrimethoxysilane, γ-chloropropyltrimethoxysilane, γ-mercaptopropyltrimethoxysilane, γ-aminopropyltrimethoxysilane, bis-[3-(triethoxysilyl) propyl] tetrasulfide, bis-[3-(triethoxysilyl) propyl] disulfide, γ-trimethoxysilylpropyldimethylthiocarbamyltetrasulfide, and γ-trimethoxysilylpropylbenzothiazyltetrasulfide.

The viscosity of the resin composition according to the embodiment of the present disclosure at 25°C is preferably 0.5 Pa·s to 10 Pa·s, more preferably 0.8 Pa s to 9 Pa·s, and even more preferably 1 Pa·s to 8 Pa s, from the viewpoint of coatability. The viscosity of the resin composition at 25°C can be measured using a B-type viscosimeter ("Digital Viscosimeter DV-II" manufactured by Brookfield Engineering Laboratories, Inc.) under the conditions of spindle: No. 18 and rotational speed 10 rpm.

(Optical Fiber)

FIG. 1 is a schematic cross-sectional view showing an example of an optical fiber according to an embodiment of the present disclosure. An optical fiber 10 includes a glass fiber 13 including a core 11 and a cladding 12, and a coating resin layer 16 including a primary resin layer 14 and a secondary resin layer 15 provided on the outer periphery of glass fiber 13.

Cladding 12 surrounds core 11. Core 11 and cladding 12 mainly contain glass such as silica glass. For example, silica glass doped with germanium or pure silica glass can be used for core 11, and pure silica glass or silica glass doped with fluorine can be used for cladding 12.

In FIG. 1, for example, the outside diameter (D2) of glass fiber 13 is about 100 μm to 125 μm, and the outside diameter (D1) of core 11 constituting glass fiber 13 is about 7 μm to 15 μm. The thickness of coating resin layer 16 is usually about 22 μm to 70 μm. The thickness of each of primary resin layer 14 and secondary resin layer 15 may be about 5 μm to 50 μm.

When the outer diameter of glass fiber 13 is about 125 μm and the thickness of coating resin layer 16 is 60 μm to 70 μm, the thickness of each of primary resin layer 14 and secondary resin layer 15 may be about 10 μm to 50 μm. For example, the thickness of primary resin layer 14 may be 35 μm and the thickness of secondary resin layer 15 may be 25 μm. The outer diameter of optical fiber 10 may be about 245 μm to 265 μm.

When the outer diameter of glass fiber 13 is about 125 μm and the thickness of coating resin layer 16 is 24 μm to 48 μm, the thickness of each of primary resin layer 14 and secondary resin layer 15 may be about 8 μm to 38 μm. For example, the thickness of primary resin layer 14 may be 25 μm and the thickness of secondary resin layer 15 may be 10 μm. The outer diameter of optical fiber 10 may be about 173 μm to 221 μm.

When the outer diameter of glass fiber 13 is about 100 μm and the thickness of coating resin layer 16 is 22 μm to 37 μm, the thickness of each of primary resin layer 14 and secondary resin layer 15 may be about 5 μm to 32 μm. For example, the thickness of primary resin layer 14 may be 25 μm and the thickness of secondary resin layer 15 may be 10 μm. The outer diameter of optical fiber 10 may be about 144 μm to 174 μm.

When the resin composition according to the embodiment of the present disclosure is applied to the primary resin layer, an optical fiber having excellent productivity can be produced.

A method for manufacturing an optical fiber according to an embodiment of the present disclosure includes applying the resin composition to an outer periphery of a glass fiber including a core and a cladding, and curing the resin composition by ultraviolet irradiation after the applying.

The Young's modulus of the primary resin layer is preferably 0.8 MPa or less and more preferably 0.5 MPa or less at 23°C ± 2°C from the viewpoint of improving the microbending resistance of the optical fiber. When the Young's modulus of the primary resin layer exceeds 0.8 MPa, an external force is easily transmitted to the glass fiber, and an increase in transmission loss due to microbending may be large.

The Young's modulus of the primary resin layer may be measured by a Pullout Modulus (POM) method at 23°C. Two portions of the optical fiber are fixed by two clamping devices, portions of a coating resin layer (a primary resin layer and a secondary resin layer) between the two clamping devices are removed, then one clamping device is fixed, and the other clamping device is slowly moved in a direction opposite to the fixed clamping device. The Young's modulus of the primary resin layer can be obtained from the following equation, where L is the length of the portion of the optical fiber held by the chuck device to be moved, Z is the amount of movement of the chuck, Dp is the outer diameter of the primary resin layer, Df is the outer diameter of the glass fiber, n is the Poisson's ratio of the primary resin layer, and W is the load during movement of the chuck device.

$$\text{Young's modulus (MPa)} = ((1 + n)\, W/\pi LZ) \times \ln (Dp\,/\,Df).$$

For example, secondary resin layer 15 may be formed by curing a resin composition containing a photopolymerizable compound including urethane (meth)acrylate, a photopolymerization initiator, and the like. The resin composition forming the secondary resin layer has a different composition from the resin composition for the primary coating. The resin composition for the secondary coating can be prepared using conventionally known techniques. The resin composition for the secondary coating may contain urethane (meth)acrylamide, urethane (meth)acrylate, or urethane (meth)acrylamide and urethane (meth)acrylate.

It is preferable that the Young's modulus of the secondary resin layer be 800 MPa or more at 23°C ± 2°C, more preferably 1000 MPa or more, and further preferably 1200 MPa or more, from the viewpoint of improving the microbending resistance of the optical fiber. Although the upper limit of the Young's modulus of the secondary resin layer is not particularly limited, the Young's modulus of the secondary resin layer may be 3000 MPa or less, 2500 MPa or less, or 2000 MPa or less at 23°C ± 2°C from the viewpoint of imparting moderate toughness to the secondary resin layer.

The Young's modulus of the secondary resin layer can be measured by the following method. First, the optical fiber is immersed in a mixed solvent of acetone and ethanol, and only the coating resin layer is extracted in a cylindrical shape. Although the primary resin layer and the secondary resin layer are united at this time, the Young's modulus of the primary resin layer is 1/1000 to 1/10000 of the Young's modulus of the secondary resin layer, the Young's modulus of the primary resin layer is therefore negligible. Next, the solvent is removed from the coating resin layer by vacuum drying, a tensile test (the tensile speed is 1 mm/minute) can be performed at 23°C, and the Young's modulus can be calculated by a secant expression at 2.5% strain.

From the viewpoint of improving the heat resistance of the secondary resin layer, the Tg of the secondary resin layer is preferably 70°C or higher, and more preferably 75°C or higher. From the viewpoint of suppressing an increase in transmission loss of the optical fiber at a low temperature, the temperature is preferably 105°C or lower, and more preferably 95°C or lower.

The method for manufacturing an optical fiber according to the embodiment of the present disclosure can produce an optical fiber having excellent productivity by using the resin composition according to the embodiment of the present disclosure as a resin composition for primary coating.

**Examples**

Hereinafter, the present disclosure will be described in more detail by showing the results of evaluation tests using Examples and Comparative Examples according to the present disclosure. However, the present invention is not limited to these examples.

[Synthesis of Urethane Acrylamide]

(A-1)

Polypropylene glycol having an Mn of 3000 (trade name "SANNIX PP-3000" produced by SANYO CHEMICAL INDUSTRIES, LTD.) and 2, 4-tolylene diisocyanate (TDI) were reacted at 60°C for 1 hour at a molar ratio of NCO to OH (NCO/OH) of 1.5 to prepare an NCO end prepolymer. As catalysts, 200 ppm dibutyltin dilaurate was added with respect to the final total fed amount. Next, N-hydroxyethyl acrylamide (HEAA) was added so that the molar ratio of OH of HEAA to NCO of the NCO end prepolymer was 1.05, and reacted at 60°C for 1 hour to obtain a urethane acrylamide (A-1) having an Mn of 11400.

(A-2)

PP-3000 and TDI were reacted at 60°C for 1 hour at an NCO/OH ratio of 1.5 to prepare an NCO end prepolymer. 200 ppm dibutyltin dilaurate was added with respect to the final total fed amount. Next, methanol was added so that the molar ratio of OH to NCO of the NCO end prepolymer was 0.4, and HEAA was added so that the molar ratio of OH to NCO of the NCO end prepolymer was 0.65, and reacted at 60°C for 1 hour to obtain a urethane acrylamide (A-2) having an Mn of 11300.

(A-3)

PP-3000 and TDI were reacted at 60°C for 1 hour at an NCO/OH ratio of 1.5 to prepare an NCO end prepolymer. 200 ppm dibutyltin dilaurate was added with respect to the final total fed amount. Next, 3-mercaptopropyl trimethoxy silane (MPTS) was added so that the molar ratio of SH to NCO of the NCO end prepolymer was 0.1, and HEAA was added so that the molar ratio of OH to NCO of the NCO end prepolymer was 0.95, and reacted at 60°C for 1 hour to obtain a urethane acrylamide (A-3) having an Mn of 11400.

(A-4)

Polypropylene glycol having an Mn of 4000 (trade name "PP-4000" produced by SANYO CHEMICAL INDUSTRIES, LTD.) and TDI were reacted at 60°C for 1 hour at an NCO/OH ratio of 1.5 to prepare an NCO end prepolymer. 200 ppm dibutyltin dilaurate was added with respect to the final total fed amount. Next, MPTS was added so that the molar ratio of SH to NCO of the NCO end prepolymer was 0.05, methanol was added so that the molar ratio of OH to NCO of the NCO end prepolymer was 0.2, and HEAA was added so that the molar ratio of OH to NCO of the NCO end prepolymer was 0.8, and reacted at 60°C for 1 hour to obtain a urethane acrylamide (A-4) having an Mn of 15900.

(A-5)

Polycarbonate diol having an Mn of 3000 (trade name "ETERNACOLL PH-300" produced by Ube Industries, Ltd.) and TDI were reacted at 60°C for 1 hour at an NCO/OH ratio of 1.5 to prepare an NCO end prepolymer. 200 ppm dibutyltin dilaurate was added with respect to the final total fed amount. Next, methanol was added so that the molar ratio of OH to NCO of the NCO end prepolymer was 0.4, and HEAA was added so that the molar ratio of OH to NCO of the NCO end prepolymer was 0.65, and reacted at 60°C for 1 hour to obtain a urethane acrylamide (A-5) having an Mn of 11600.

(A-6)

Polytetramethylene glycol having an Mn of 3000 (trade name "PTG-L" produced by Hodogaya Chemical Co., Ltd.) and TDI were reacted at 60°C for 1 hour at an NCO/OH ratio of 1.5 to prepare an NCO end prepolymer. 200 ppm dibutyltin dilaurate was added with respect to the final total fed amount. Next, methanol was added so that the molar ratio of OH to NCO of the NCO end prepolymer was 0.4, and HEAA was added so that the molar ratio of OH to NCO of the NCO end prepolymer was 0.65, and reacted at 60°C for 1 hour to obtain a urethane acrylamide (A-6) having an Mn of 11500.

(A-7)

Polypropylene glycol having an Mn of 12000 (trade name "PREMINOL S4013F" produced by AGC Co., Ltd.) and TDI were reacted at 60°C for 1 hour at an NCO/OH ratio of 2.0 to prepare an NCO end prepolymer. 200 ppm dibutyltin dilaurate was added with respect to the final total fed amount. Next, MPTS was added so that the molar ratio of SH to NCO of the NCO end prepolymer was 0.05, methanol was added so that the molar ratio of OH to NCO of the NCO end prepolymer was 0.2, and HEAA was added so that the molar ratio of OH to NCO of the NCO end prepolymer was 0.8, and reacted at 60°C for 1 hour to obtain a urethane acrylamide (A-7) having an Mn of 23400.

(A-8)

Polypropylene glycol having an Mn of 18000 (trade name "PREMINOL S4318F" produced by AGC Co., Ltd.) and TDI were reacted at 60°C for 1 hour at an NCO/OH ratio of 2.0 to prepare an NCO end prepolymer. 200 ppm dibutyltin dilaurate was added with respect to the final total fed amount. Next, HEAA was added so that the molar ratio of OH to NCO of the NCO end prepolymer was 1.05, and reacted at 60°C for 1 hour to obtain a urethane acrylamide (A-8) having an Mn of 36500.

(B-1)

Polypropylene glycol having an Mn of 3000 (trade name "SANNIX PP-3000" produced by SANYO CHEMICAL INDUSTRIES, LTD.) and 2, 4-tolylene diisocyanate (TDI) were reacted at 60°C for 1 hour at a molar ratio of NCO to OH (NCO/OH) of 1.5 to prepare an NCO end prepolymer. As catalysts, 200 ppm dibutyltin dilaurate was added with respect to the final total fed amount. Next, N-hydroxyethyl acrylamide (HEAA) was added so that the molar ratio of OH to NCO of the NCO end prepolymer was 0.9, and 2-hydroxyethyl acrylate (HEA) was added so that the molar ratio of OH to NCO of the NCO end prepolymer was 0.15, and reacted at 60°C for 1 hour to obtain a urethane acrylamide (B-1) having an Mn of 11400.

(B-2)

PP-3000 and TDI were reacted at 60°C for 1 hour at an NCO/OH ratio of 1.5 to prepare an NCO end prepolymer. As catalysts, 200 ppm dibutyltin dilaurate was added with respect to the final total fed amount. Next, HEAA was added so that the molar ratio of OH to NCO of the NCO end prepolymer was 0.3, and HEA was added so that the molar ratio of OH to NCO of the NCO end prepolymer was 0.75, and reacted at 60°C for 1 hour to obtain a urethane acrylamide (B-2) having an Mn of 11400.

(B-3)

PP-3000 and TDI were reacted at 60°C for 1 hour at an NCO/OH ratio of 1.5 to prepare an NCO end prepolymer. As catalysts, 200 ppm dibutyltin dilaurate was added with respect to the final total fed amount. Next, HEAA was added so that the molar ratio of OH to NCO of the NCO end prepolymer was 0.5, HEA was added so that the molar ratio of OH to NCO of the NCO end prepolymer was 0.15, and methanol was added so that the molar ratio of OH to NCO of the NCO end prepolymer was 0.4, and reacted at 60°C for 1 hour to obtain a urethane acrylamide (B-3) having an Mn of 11300.

(B-4)

Polypropylene glycol having an Mn of 4000 (trade name "SANNIX PP-4000" produced by SANYO CHEMICAL INDUSTRIES, LTD.) and TDI were reacted at 60°C for 1 hour at an NCO/OH ratio of 1.5 to prepare an NCO end prepolymer. As catalysts, 200 ppm dibutyltin dilaurate was added with respect to the final total fed amount. Next, HEAA was added so that the molar ratio of OH to NCO of the NCO end prepolymer was 0.6, HEA was added so that the molar ratio of OH to NCO of the NCO end prepolymer was 0.2, methanol was added so that the molar ratio of OH to NCO of the NCO end prepolymer was 0.2, and 3-mercaptopropyl trimethoxy silane (MPTS) was added so that the molar ratio of SH to NCO of the NCO end prepolymer was 0.05, and reacted at 60°C for 1 hour to obtain a urethane acrylamide (B-4) having an Mn of 15900.

(B-5)

Polycarbonate diol having an Mn of 3000 (trade name "ETERCOLL PH-300" produced by Ube Industries, Ltd.) and TDI were reacted at 60°C for 1 hour at an NCO/OH ratio of 1.5 to prepare an NCO end prepolymer. As catalysts, 200 ppm dibutyltin dilaurate was added with respect to the final total fed amount. Next, HEAA was added so that the molar ratio of OH to NCO of the NCO end prepolymer was 0.5, HEA was added so that the molar ratio of OH to NCO of the NCO end prepolymer was 0.15, and methanol was added so that the molar ratio of OH to NCO of the NCO end prepolymer was 0.4, and reacted at 60°C for 1 hour to obtain a urethane acrylamide (B-5) having an Mn of 11500.

(B-6)

Polytetramethylene glycol having an Mn of 3000 (trade name "PTG-L" produced by Hodogaya Chemical Co., Ltd.) and TDI were reacted at 60°C for 1 hour at an NCO/OH ratio of 1.5 to prepare an NCO end prepolymer. As catalysts, 200 ppm dibutyltin dilaurate was added with respect to the final total fed amount. Next, HEAA was added so that the molar ratio of OH to NCO of the NCO end prepolymer was 0.5, HEA was added so that the molar ratio of OH to NCO of the NCO end prepolymer was 0.15, and methanol was added so that the molar ratio of OH to NCO of the NCO end prepolymer was 0.4, and reacted at 60°C for 1 hour to obtain a urethane acrylamide (B-6) having an Mn of 11500.

(B-7)

Polypropylene glycol having an Mn of 12000 (trade name "PREMINOL S4013F" produced by AGC Co., Ltd.) and TDI were reacted at 60°C for 1 hour at an NCO/OH ratio of 2.0 to prepare an NCO end prepolymer. As catalysts, 200 ppm dibutyltin dilaurate was added with respect to the final total fed amount. Next, HEAA was added so that the molar ratio of OH to NCO of the NCO end prepolymer was 0.6, HEA was added so that the molar ratio of OH to NCO of the NCO end prepolymer was 0.2, methanol was added so that the molar ratio of OH to NCO of the NCO end prepolymer was 0.2, and 3-mercaptopropyl trimethoxy silane was added so that the molar ratio of SH to NCO of the NCO end prepolymer was 0.05, and reacted at 60°C for 1 hour to obtain a urethane acrylamide (B-7) having an Mn of 23300.

(B-8)

Polypropylene glycol having an Mn of 18000 (trade name "PREMINOL S4318F" produced by AGC Co., Ltd.) and TDI were reacted at 60°C for 1 hour at an NCO/OH ratio of 2.0 to prepare an NCO end prepolymer. As catalysts, 200 ppm dibutyltin dilaurate was added with respect to the final total fed amount. Next, HEAA was added so that the molar ratio of OH to NCO of the NCO end prepolymer was 0.6, HEA was added so that the molar ratio of OH to NCO of the NCO end prepolymer was 0.2, and 3-mercaptopropyl trimethoxy silane was added so that the molar ratio of SH to NCO of the NCO end prepolymer was 0.25, and reacted at 60°C for 1 hour to obtain a urethane acrylamide (B-8) having an Mn of 36600.

[Synthesis of Urethane acrylate]

(Y-1)

PP-3000 and TDI were reacted at 60°C for 1 hour at an NCO/OH ratio of 1.5 to prepare an NCO end prepolymer. 200 ppm dibutyltin dilaurate was added with respect to the final total fed amount. Next, HEA was added so that the molar ratio of OH to NCO of the NCO end prepolymer was 1.05, and reacted at 60°C for 1 hour to obtain a urethane acrylate (Y-1) having an Mn of 11300.

(Y-2)

PP-3000 and TDI were reacted at 60°C for 1 hour at an NCO/OH ratio of 1.5 to prepare an NCO end prepolymer. 200 ppm dibutyltin dilaurate was added with respect to the final total fed amount. Next, methanol was added so that the molar ratio of OH to NCO of the NCO end prepolymer was 0.4, and HEA was added so that the molar ratio of OH to NCO of the NCO end prepolymer was 0.65, and reacted at 60°C for 1 hour to obtain a urethane acrylate (Y-2) having an Mn of 11200.

(Z-1)

A urethane acrylate (Z-1) having an Mn of 2200 was obtained in the same manner as in the synthesis of (Y-1) except that a polypropylene glycol having an Mn of 600 (trade name "PP-600" produced by SANYO CHEMICAL INDUSTRIES, LTD.) and TDI were reacted at NCO/OH of 2.0 to prepare an NCO end prepolymer.

The Mn of polyol is a value described in a catalog of each product. The Mn of urethane acrylamide and urethane acrylate was measured using ACQUITY APC RI system manufactured by Waters under the following conditions: sample concentration: 0.2 % by mass THF solution, injection volume: 20 $\mu$L, sample temperature: 15°C, mobile phase: THF, XT column for organic solvents: particle size 2.5 $\mu$m, pore size 450 Å, column internal diameter 4.6 $\times$ column length 150 mm + particle size 2.5 $\mu$m, pore size 125 Å, column internal diameter 4.6 $\times$ column length 150 mm + particle size 1.7 $\mu$m, pore size 45 Å, column internal diameter 4.6 $\times$ column length 150 mm, column temperature: 40°C, flow velocity: 0.8 mL/minute.

Nonylphenol polyethylene glycol acrylate (trade name "Aronix M-113" produced by TOAGOSEI CO., LTD.), 2-(2-ethoxyethoxy) ethylacrylate (EOEOEA), trimethylolpropane triacrylate (TMPTA), N-vinylcaprolactam (NVCL), acryloyl morpholine (ACMO), bisphenol A-epoxy di(meth)acrylate (trade name "Viscoat #540" produced by OSAKA ORGANIC CHEMICAL INDUSTRY LTD.), and tripropyleneglycol diacrylate (TPGDA) were prepared as photopolymerizable compounds. 2,4,6-trimethylbenzoyl diphenylphosphine oxide (Omnirad TPO) and 1-hydroxycyclohexyl phenyl ketone (Omnirad 184) were prepared as photopolymerization initiators. 3-acryloxypropyl trimethoxysilane (APTMS) was prepared as a silane coupling agent.

[Resin Composition for Primary Coating]

A photopolymerizable compound, a photopolymerization initiator, and a silane coupling agent were mixed in amounts (parts by mass) shown in Table 1, Table 2, or Table 3 to prepare a resin composition for primary coating of each Example and Comparative Example.

[Resin Composition for Secondary Coating]

A resin composition for secondary coating was obtained by mixing 25 parts by mass of urethane acrylate (Z-1), 36 parts by mass of TPGTA, 37 parts by mass of Viscoat #540, 1 part by mass of Omnirad TPO, and 1 part by mass of Omnirad 184.

[Production of Optical Fiber]

A resin composition for primary coating and a resin composition for secondary coating were applied respectively to an outer circumferential surface of glass fiber 13 having a diameter of 125 $\mu$m. Then, each resin composition was cured by irradiation with ultraviolet rays to form coating resin layer 16 including primary resin layer 14 and secondary resin layer 15, thereby producing optical fiber 10. The thickness of primary resin layer 14 was 35 $\mu$m, and the thickness of secondary resin layer 15 was 25 $\mu$m. Optical fibers were prepared by changing the linear velocity to 2500 m/min, 3000 m/min, and 3500 m/min, respectively.

(Young's modulus of primary resin layer)

The Young's modulus of the primary resin layer was measured by a Pullout Modulus (POM) method at 23°C.

(Gel fraction)

The optical fiber was immersed in methylethylketone at 60°C for 12 hours to extract uncured components in the coating resin layer. After the optical fiber was taken out, the methylethylketone was removed by a vacuum drier, and the gel fraction was determined by the following equation.

$$\text{Gel fraction [\%]} = (\text{mass of optical fiber after extraction - mass}$$
$$\text{of glass fiber}) / (\text{mass of optical fiber before extraction - mass of glass}$$
$$\text{fiber}) \times 100$$

Although the uncured components in the primary resin layer and the secondary resin layer are extracted, since the secondary resin layer uses the same resin composition, the curability of the primary resin layer can be compared. A case where the gel fraction was more than 80% was evaluated as "A", a case where the gel fraction was 70% to 80% was evaluated as "B", and a case where the gel fraction was less than 70% was evaluated as "C".

(Low Temperature Characteristics)

The optical fiber was wound around the glass bobbin in a single layer with a tensile force 50 g, and the transmission characteristics of the signal light having the wave length 1550 nm were measured under the temperature conditions of 23°C and -40°C to obtain the transmission loss at 23°C and -40°C. A case where the transmission loss difference obtained by subtracting the transmission loss at 23°C from the transmission loss at -40°C was less than 0 dB was evaluated as "A", a case of 0 dB to 0.01 dB/km was evaluated as "B", and a case of more than 0.01 dB/km was evaluated as "C".

[Table 1]

| Example | | 1 | 2 | 3 | 4 | 5 | 6 | 7 | 8 | 9 |
|---|---|---|---|---|---|---|---|---|---|---|
| Urethane acrylamide | A-1 | 70 | 70 | - | - | - | - | - | - | - |
| | A-2 | - | - | 70 | - | - | - | - | - | - |
| | A-3 | - | - | - | 70 | - | - | - | - | - |
| | A-4 | - | - | - | - | 70 | - | - | - | - |
| | A-5 | - | - | - | - | - | 70 | - | - | - |
| | A-6 | - | - | - | - | - | - | 70 | - | - |
| | A-7 | - | - | - | - | - | - | - | 60 | - |
| | A-8 | - | - | - | - | - | - | - | - | 40 |
| Urethane acrylate | Y-1 | - | - | - | - | - | - | - | - | 20 |
| Monomer | M-113 | 18 | 18 | 18 | 18 | 17 | 18 | 18 | 18 | 18 |
| | EOEOEA | 10 | - | - | - | - | - | - | - | - |
| | TMPTA | - | - | - | - | 1 | - | - | - | - |
| | NVCL | - | 10 | 10 | 10 | 10 | 10 | 10 | 10 | 10 |
| | ACMO | - | - | - | - | - | - | - | 10 | 10 |
| Omnirad TPO | | 1 | 1 | 1 | 1 | 1 | 1 | 1 | 1 | 1 |
| APTMS | | 1 | 1 | 1 | 1 | 1 | 1 | 1 | 1 | 1 |
| Young's modulus (MPa) | 2500m/min. | 0.6 | 0.8 | 0.3 | 0.7 | 0.3 | 0.4 | 0.3 | 0.4 | 0.5 |
| | 3000m/ min | 0.4 | 0.6 | 0.3 | 0.5 | 0.2 | 0.4 | 0.3 | 0.3 | 0.4 |
| | 3500m/ min | 0.3 | 0.4 | 0.2 | 0.3 | 0.1 | 0.3 | 0.2 | 0.2 | 0.3 |
| Gel fraction | 2500m/ min | A | A | A | A | A | A | A | A | A |
| | 3000m/ min | A | A | A | A | A | A | A | A | A |
| | 3500m/ min | B | A | A | A | A | A | A | A | A |

(continued)

| Example | | 1 | 2 | 3 | 4 | 5 | 6 | 7 | 8 | 9 |
|---|---|---|---|---|---|---|---|---|---|---|
| Low Temperature Characteristics | 2500m/ min | A | A | A | A | A | A | A | A | A |
| | 3000m/ min | A | A | A | A | A | A | A | A | A |
| | 3500m/ min | B | A | A | A | A | A | A | A | A |

[Table 2]

| Example | | 10 | 11 | 12 | 13 | 14 | 15 | 16 | 17 | 18 |
|---|---|---|---|---|---|---|---|---|---|---|
| Urethane acrylamide | B-1 | 70 | 70 | - | - | - | - | - | - | - |
| | B-2 | - | - | 70 | - | - | - | - | - | - |
| | B-3 | - | - | - | 70 | - | - | - | - | - |
| | B-4 | - | - | - | - | 70 | - | - | - | - |
| | B-5 | - | - | - | - | - | 70 | - | - | - |
| | B-6 | - | - | - | - | - | - | 70 | - | - |
| | B-7 | - | - | - | - | - | - | - | 60 | - |
| | B-8 | - | - | - | - | - | - | - | - | 50 |
| Monomer | M-113 | 18 | 18 | 18 | 18 | 17 | 18 | 18 | 18 | 28 |
| | EOEOEA | 10 | - | - | - | - | - | - | - | - |
| | TMPTA | - | - | - | - | 1 | - | - | - | - |
| | NVCL | - | 10 | 10 | 10 | 10 | 10 | 10 | 10 | 10 |
| | ACMO | - | - | - | - | - | - | - | 10 | 10 |
| Omnirad TPO | | 1 | 1 | 1 | 1 | 1 | 1 | 1 | 1 | 1 |
| APTMS | | 1 | 1 | 1 | 1 | 1 | 1 | 1 | 1 | 1 |
| Young's modulus (MPa) | 2500m/min | 0.6 | 0.8 | 0.8 | 0.3 | 0.3 | 0.4 | 0.3 | 0.3 | 0.3 |
| | 3000m/ min | 0.6 | 0.6 | 0.5 | 0.3 | 0.2 | 0.4 | 0.2 | 0.3 | 0.2 |
| | 3500m/ min | 0.3 | 0.4 | 0.3 | 0.2 | 0.1 | 0.3 | 0.2 | 0.2 | 0.2 |
| Gel fraction | 2500m/ min | A | A | A | A | A | A | A | A | A |
| | 3000m/ min | A | A | A | A | A | A | A | A | A |
| | 3500m/ min | B | A | B | A | A | A | A | A | A |
| Low Temperature Characteristics | 2500m/ min | A | A | A | A | A | A | A | A | A |
| | 3000m/ min | A | A | A | A | A | A | A | A | A |
| | 3500m/ min | B | A | B | A | A | A | A | A | A |

[Table 3]

| Comparative Example | | 1 | 2 | 3 |
|---|---|---|---|---|
| Urethane acrylate | Y-1 | 70 | 70 | - |
| | Y-2 | - | - | 70 |

(continued)

| Comparative Example | | 1 | 2 | 3 |
|---|---|---|---|---|
| Monomer | M-113 | 18 | 18 | 18 |
| | EOEOEA | 10 | - | - |
| | NVCL | - | 10 | 10 |
| Omnirad TPO | | 1 | 1 | 1 |
| APTMS | | 1 | 1 | 1 |
| Young's modulus (MPa) | 2500m/min | 0.6 | 0.8 | 0.3 |
| | 3000m/ min | 0.3 | 0.5 | 0.2 |
| | 3500m/ min | 0.2 | 0.3 | 0.1 |
| Gel fraction | 2500m/ min | A | A | A |
| | 3000m/ min | C | A | B |
| | 3500m/ min | C | C | C |
| Low Temperature Characteristics | 2500m/ min | B | A | A |
| | 3000m/ min | C | B | B |
| | 3500m/ min | C | C | C |

**Reference Signs List**

10 Optical fiber

11 Core

12 Cladding

13 Glass fiber

14 Primary resin layer

15 Secondary resin layer

16 Coating resin layer

**Claims**

1. A resin composition for primary coating of an optical fiber, the resin composition comprising:

   a photopolymerizable compound including a urethane (meth)acrylamide; and
   a photopolymerization initiator,
   wherein the urethane (meth)acrylamide has a (meth)acrylamide group at at least one end of a urethane bond.

2. The resin composition according to claim 1, wherein the urethane (meth)acrylamide includes a urethane oligomer having a (meth)acrylamide group at one end of a urethane bond, a urethane oligomer having (meth)acrylamide groups at both ends of a urethane bond, or a mixture of the urethane oligomers.

3. The resin composition according to claim 2, wherein the urethane oligomer having a (meth)acrylamide group at one end of a urethane bond includes a urethane oligomer having a (meth)acrylamide group at one end of a urethane bond and having a (meth)acryloyloxy group at the other end.

4. The resin composition according to any one of claims 1 to 3, wherein the urethane (meth)acrylamide includes a urethane oligomer having (meth)acrylamide groups at both ends of a urethane bond and a urethane oligomer having a (meth)acrylamide group at one end of a urethane bond and having, at the other end, a group derived from at least one compound selected from monohydric alcohols and active hydrogen-containing silane compounds.

5. The resin composition according to any one of claims 1 to 4, wherein a content of the urethane (meth)acrylamide is 10 parts by mass to 90 parts by mass based on 100 parts by mass of a total amount of the resin composition.

6. The resin composition according to any one of claims 1 to 5, wherein the urethane (meth)acrylamide has a number-average molecular weight of 10000 to 37000.

7. The resin composition according to any one of claims 1 to 6, wherein the photopolymerizable compound further includes a (meth)acrylic acid ester.

8. The resin composition according to any one of claims 1 to 7, wherein the photopolymerizable compound further includes an N-vinyl compound.

9. The resin composition according to any one of claims 1 to 8, wherein the photopolymerizable compound further includes a (meth)acrylamide compound.

10. An optical fiber comprising:

a glass fiber including a core and a cladding;
a primary resin layer covering the glass fiber so as to be in contact with the glass fiber, and
a secondary resin layer covering the primary resin layer,
wherein the primary resin layer includes a cured product of the resin composition according to any one of claims 1 to 9.

11. A method for manufacturing an optical fiber, the method comprising:

applying the resin composition according to any one of claims 1 to 9 to an outer periphery of a glass fiber including a core and a cladding; and
curing the resin composition by ultraviolet irradiation after the applying.

# Fig.1

## INTERNATIONAL SEARCH REPORT

| International application No. |
|---|
| **PCT/JP2021/028643** |

**A. CLASSIFICATION OF SUBJECT MATTER**

*C08F 290/06*(2006.01)i; *C08G 18/28*(2006.01)i; *C08G 18/67*(2006.01)i; *C03C 25/285*(2018.01)i; *C03C 25/326*(2018.01)i; *C03C 25/6226*(2018.01)i; *G02B 6/44*(2006.01)i

FI: C03C25/326; G02B6/44 301A; G02B6/44 301B; G02B6/44 331; C03C25/6226; C08G18/67 010; C08G18/28 090; C08G18/28 015; C08F290/06; C03C25/285

According to International Patent Classification (IPC) or to both national classification and IPC

**B. FIELDS SEARCHED**

Minimum documentation searched (classification system followed by classification symbols)

C08F290/06; C08G18/00; C03C25/326; C03C25/6226; G02B6/44

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 63-239139 A (NITTO ELECTRIC IND CO LTD) 05 October 1988 (1988-10-05) claims, page 2, upper right column, line 19 to lower right column, line 1, page 3, upper left column, line 7 to page 4, upper left column, line 14, examples 1-4 | 1-11 |
| A | JP 2016-522428 A (CORNING INCORPORATED) 28 July 2016 (2016-07-28) paragraphs [0071], [0072], [0099], [0100] | 1-11 |
| A | JP 2009-203360 A (JSR CORP) 10 September 2009 (2009-09-10) claims, paragraph [0001] | 1-11 |
| A | JP 2009-237284 A (JSR CORP) 15 October 2009 (2009-10-15) claims, paragraphs [0005], [0054] | 1-11 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 September 2021** | **05 October 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2021/028643**

| Patent document cited in search report | | | Publication date (day/month/year) | Patent family member(s) | | | Publication date (day/month/year) |
|---|---|---|---|---|---|---|---|
| JP | 63-239139 | A | 05 October 1988 | (Family: none) | | | |
| JP | 2016-522428 | A | 28 July 2016 | US paragraphs [0066], [0067], [0094], [0095] | 2014/0308015 | A1 | |
| | | | | WO | 2014/172143 | A1 | |
| JP | 2009-203360 | A | 10 September 2009 | WO claims, page 1, lines 5-6 | 2009/108055 | A1 | |
| JP | 2009-237284 | A | 15 October 2009 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020168494 A
- JP 2020168496 A
- JP 2009197163 A
- JP 2012111674 A

- JP 2013136783 A
- JP 2013501125 A
- JP 2014114208 A